# EUROPEAN PATENT SPECIFICATION

(11) **EP 0 471 799 B1**
(45) Date of publication and mention of the grant of the patent: **27.12.1996**
(21) Application number: 90912562.7
(22) Date of filing: 02.03.1990
(51) Int. Cl.: G01S 13/04

(54) **TIME DOMAIN RADIO TRANSMISSION SYSTEM**
FUNKSENDESYSTEM IM ZEITBEREICH
SYSTEME DE TRANSMISSION RADIO A DOMAINES TEMPORELS

(43) Date of publication of application: 26.02.1992
(73) Proprietor: FULLERTON, Larry W, Huntsville, AL 35810 (US)
(72) Inventor: FULLERTON, Larry W, Huntsville, AL 35810 (US)
(74) Representative: Simonnot, Bernard
(86) International application number: US9001174
(87) International publication number: WO9113370

(56) References cited:
- US-A- 3 806 795
- US-A- 4 485 385
- US-A- 4 641 317
- US-A- 4 743 906
- US-A- 4 885 589

## Description

### Field of the Invention

This invention relates generally to radio systems wherein time-spaced, essentially monocycles, are created from D.C. pulses and transmitted into space wherein the resulting energy bursts are dispersed in terms of frequency to where the spectral density essentially merges with ambient noise, and yet information relating to these bursts is recoverable.

### Background of the Invention

Radio transmissions have heretofore been largely approached from the point of view of frequency channelling. Thus, coexistent orderly radio transmissions are permissible by means of assignment of different frequencies or frequency channels to different users, particularly as within the same geographic area. Essentially foreign to this concept is that of tolerating transmissions which are not frequency limited. While it would seem that the very notion of not limiting frequency response would create havoc with existing frequency denominated services, it has been previously suggested that such is not necessarily true and that, at least theoretically, it is possible to have overlapping use of the radio spectrum. One suggested mode is that provided wherein very short, on the order of one nanosecond or less, radio pulses are applied to a broadband antenna which ideally would respond by transmitting short burst signals, typically comprising three to four polarity lobes, which comprise, energywise, signal energy over essentially the upper portion (above 100 megacycles) of the most frequently used radio frequency spectrum, that is, up to the mid-gigahertz region. A basic discussion of impulse effected radio transmission is contained in an article entitled "Time Domain Electromagnetics and Its Application," Proceedings of the IEEE, Vol. 66, No. 3, March 1978. This article particularly suggests the employment of such technology for baseband radar, and ranges from 5 to 5,000 feet are suggested. As noted, this article appeared in 1978, and now, 12 years later, it is submitted that little has been accomplished by way of achieving commercial application of this technology.

From both a theoretical and an experimental examination of the art, it has become clear to the applicant that the lack of success has largely been due to several factors. One is that the extremely wide band of frequencies to be transmitted poses very substantial requirements on an antenna. Antennas are generally designed for limited frequency bandwidths, and traditionally when one made any substantial change in frequency, it became necessary to choose a different antenna or an antenna of different dimensions. This is not to say that broadband antennas do not, in general, exist; however, applicant has reviewed many types including bicone, horn, and log periodic types and has determined that none provided a practical antenna which will enable impulse radio and radar usage to spread beyond the laboratory. This conclusion is believed applicable to the broadband antenna disclosed in U.S. Patent No. 4,485,385. While this antenna employs a generally reverse bicone approach, which is deemed a good one, it stops short of achieving the extremely broadband effect needed for time domain transmissions wherein the effective bandwidth must be on the order of a gigahertz or more as described above. It is to be noted that the bandwidth dealt with by this patent appears to be in the low hundreds of megahertz. This restrictive effect appears to lie in the structure of the antenna wherein the basic dipole configuration has been converted to one which can be described as a quadrapole configuration, this being by the addition of tuned short stubs and which really creates two more poles. It is also believed pertinent that the addition of the stubs adds an undesired dissemetry to the otherwise diamond-shape configuration.

Beyond this, since the shorted stubs electrically short, make conductive, a path between the basic two elements, such an antenna cannot be used for time domain transmissions as there must be an interruptable path between the basic elements of the antenna, as is illustrated by the present invention.

A second problem which has plagued advocates of the employment of impulse or time domain technology for radio is that of effectively receiving and detecting the presence of the wide spectrum that a monocycle burst products, particularly in the presence of high levels of existing ambient radiation, presently nearly everywhere. Ideally, a necessary antenna would essentially evenly reproduce the spectrum transmitted ,and the receiver it feeds would have special properties which enable it to be utilized despite the typically high noise level with which it must compete. The state of the art prior to applicant's entrance generally involved the employment of brute force detection, that of threshold or time threshold gate detection. Threshold detection simply enables passage of signals higher than a selected threshold level. The problem with this approach is obvious in that if one transmits impulse generated signals which are of sufficient amplitude to rise above ambient signal levels, the existing radio services producing the latter may be unacceptably interfered with. For some reason, perhaps because of bias produced by the wide spectrum of signal involved, e.g., from 50 MHz to on the order of 5 GHz, the possibility of coherent detection has been thought impossible. This problem has now been solved as set forth in U.S. Patent No. 4,743,906 by a unique form of coherent detection.

Accordingly, it is the object of this invention to provide an impulse or time domain (or baseband) transmission system which attacks all of the above problems and to provide a complete impulse time domain transmission system which, in the applicant's view, eliminates the known practical barriers to its employment, and, importantly, its employment for all important electromagnetic modes of radio, including communications, telemetry, navigation, and radar.

### Summary of the Invention

With respect to the antenna problem, applicant has determined a truly pulse-responsive antenna which translates an applied D.C. impulse into essentially a monocycle. It is a dipole which is completely the reverse of the conventional bat wing antenna and wherein two triangular elements of the dipole are positioned with their bases closely adjacent and driven at near adjacent points on the bases bisected by a line between apexes of the two triangular elements. This bisecting line may mark a side or height dimension of the two triangular elements.

As a further consideration, power restraints in the past have been generally limited to the application of a few hundred volts of applied signal energy to the transmitting antenna. Where this is a problem, it may be overcome by a transmitter switch which is formed by a normally insulating crystalline structure, such as diamond material sandwiched between two metallic electrodes, which are then closely coupled to the elements of the antenna. This material is switched to a conductive, or less resistive, state by exciting it with an appropriate wavelength beam of light, ultraviolet in the case of diamond. In this manner, no metallic triggering communications line extends to the antenna which might otherwise pick up radiation and re-radiate it, adversely effecting signal coupling to the antenna and interfering with the signal radiated from it, both of which tend to prolong the length of a signal burst, a clearly adverse effect.

With respect to a radio receiver, a like receiving antenna is typically employed to that used for transmission as described above. Second, a coordinately timed signal to that of the transmitted signal is either detected from the received signal, as in communications or telemetry, or received directly from the transmitter as, for example, in the case of radar. Then, the coordinately timed signal, typically a simple half cycle of energy, is mixed or multiplied with the received signal to determine modulation or position of a target at a selected range, as the case may be.

Further, transmitted burst signals may be varied in time pattern (in addition to a modulation pattern for communications or telemetry). This greatly increases the security of the system and differentiates signals from nearly, if not all, ambient signals, that is, ambient signals which are not synchronous with transmitted burst signals, an effect readily achievable. This also enables the employment of faster repetition rates with radar which would, absent such varying or dithering, create range ambiguities as between returns from successive transmission and therefore ranges. Burst signals are signals generated when a stepped voltage change is applied to an impulse-responsive antenna as illustrated and discussed herein.

As still a further feature of this invention, the repetition rate of burst signals may be quite large, say, for example, up to 100 MHz, or higher, this enabling a very wide frequency dispersion, and thus for a given overall power level, the energy at any one frequency would be extremely small, thus effectively eliminating the problem of interference with existing radio frequency based services.

As still a further feature of this invention, moving targets are detected in terms of their velocity by means of the employment of a bandpass filter following mixing and double integration of signals. As a still further feature of the invention when employed in this latter mode, two channels of reception are ideally employed wherein the incoming signal is multiplied by a selected range, or timed, locally generated signal in one channel, and mixing the same incoming signal by a slightly delayed, locally generated signal in another channel, delay being on the order of one-fourth to one-half of the time of a monocycle. This accomplishes target differentiation without employing a separate series of transmissions.

As still another feature of this invention, multiple radiators or receptors would be employed in an array wherein their combined effect would be in terms of like or varied in time of sensed (or transmitted) output and to thereby accent either a path normal to the face of the antenna or to effect a steered path offset to a normal path accomplished by selected signal delay paths.

As still another feature of this invention, radio antenna elements would be positioned in front of a reflector wherein the distance between the elements and reflector is in terms of the time of transmission from an element or elements to reflector and back to element(s), typically about 7.62cm (3 inches), this being with a tip-to-tip dimension of elements of approximately 22.86cm (9 inches).

### Brief Description of the Drawings

Fig. 1 is a combination block-schematic diagram of a time domain system.

Fig. 1b is a schematic diagram of an alternate form of the output stage for the transmitter shown in Fig. 1.

Fig. 2 is a block diagram of a time domain receiver as contemplated by this invention.

Fig. 3 is a set of electrical waveforms illustrative of aspects of the circuitry shown in Figs. 1 and 1b.

Fig. 4 is a set of electrical waveforms illustrating aspects of operation of the circuitry shown in Fig. 2.

Fig. 5 is an electrical block diagram illustrative of a basic radar system constructed in accordance with this invention.

Figs. 6 and 7 illustrate the configuration of an antenna in accordance with the invention.

Fig. 6a is an alternate form of antenna constructed in accordance with this invention.

Figs. 8 and 9 diagrammatically show an antenna array. Fig. 9a shows an alternate antenna array, and 7.

Figs. 10-15 illustrate different switching assemblies as employed in the charging and discharging of antennas to effect signal transmission.

Fig. 16 illustrates a radar system particularly for employment in facility surveillance, and Fig. 17 illustrates a modification of this radar system.

Figs. 18 and 19 illustrate the general arrangement of transmission and receiving antennas for three-dimensional location of targets.

### Description of the Preferred Embodiment

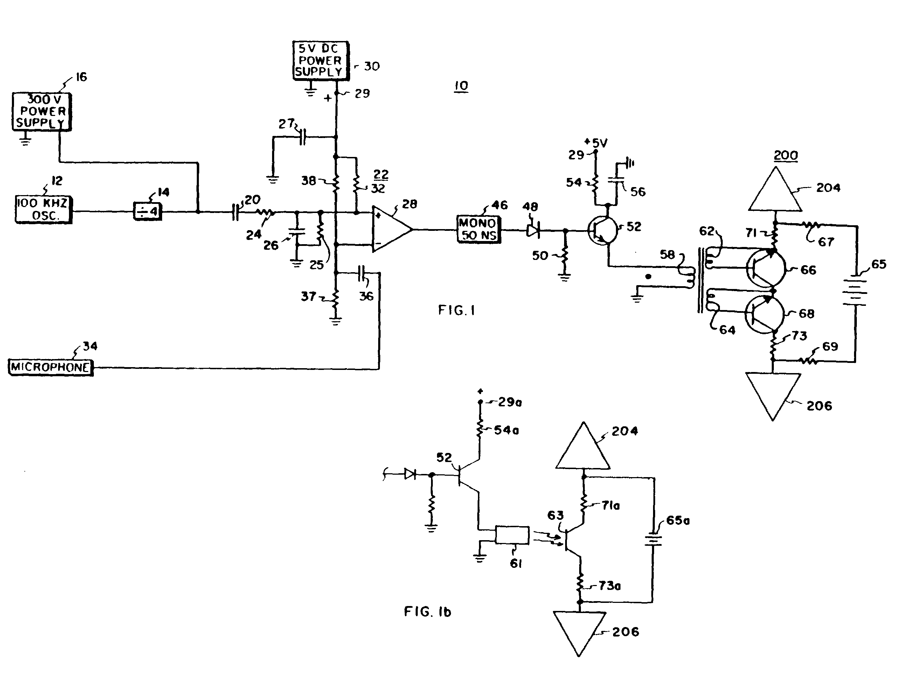

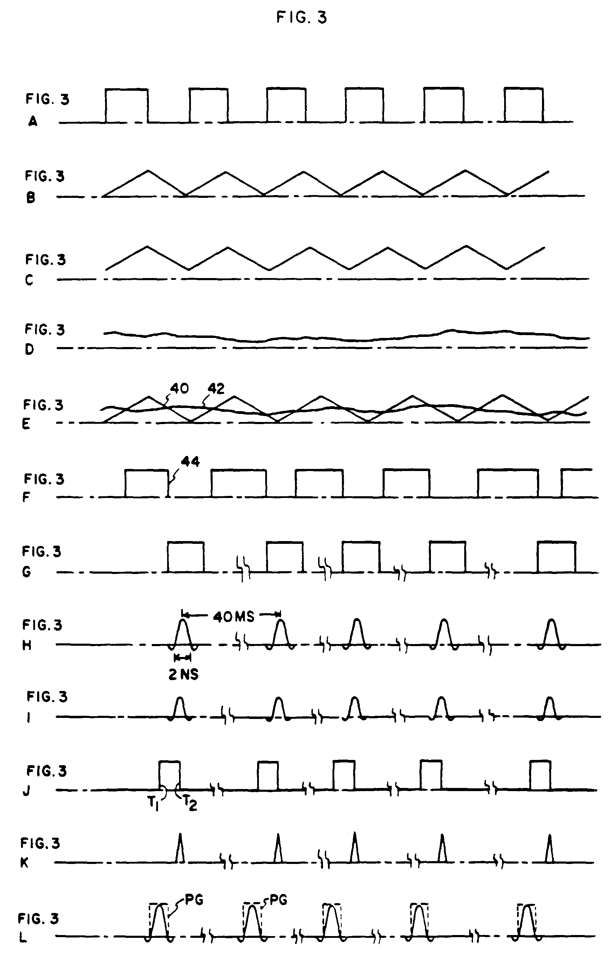

Referring to Fig. 1, and initially to transmitter 10, a base frequency of 100 KHz is generated by oscillator 12, typically being a crystal controlled oscillator. Its output, a pulse signal, is applied to divide-by-4 divider 14 to provide at its output a 25 KHz, 0-5 volt, pulse signal shown in waveform A of Fig. 3. Further alphabetic references to waveforms will simply identify them by their letter identity and will not further refer to the figure, which will be Fig. 3. The 25 KHz output is employed as a general transmission signal and as an input to power supply 16. The latter is regulated, one which supplies a 300-volt D.C. bias on a non-interfering basis for the output stage 18 of transmitter 10, which is also keyed at the 25 KHz rate.

The output of divide-by-four divider 14 is employed as a signal base and as such is supplied through capacitor 20 to pulse position modulator 22. Pulse position modulator 22 includes in its input an RC circuit consisting of resistor 24 and capacitor 26 which convert the square wave input to an approximately triangular wave as shown in waveform B, it being applied across resistor 25 to the non-inverting input of comparator 28. A selected or reference positive voltage, filtered by capacitor 27, is also applied to the non-inverting input of comparator 28, it being supplied from +5 volt terminal 29 of D.C. bias supply 30 through resistor 32. Accordingly, for example, there would actually appear at the non-inverting input a triangular wave biased upward positively as illustrated by waveform C.

The actual conduction level of comparator 28 is determined by an input signal supplied through capacitor 36, across resistor 37, to the inverting input of comparator 28, as biased from supply 30 through resistor 38 and across resistor 32. The combined signal input bias is illustrated in waveform D. Signal input may be simply the audio output of microphone 34, amplified, if needed, by amplifier 35. Alternately, with switch 39 closed, it may be the sum of the audio output and a signal offset or dither voltage, for example, provided by the output of signal generator 33, signals being summed across resistor 41. Signal generator 33 may, for example, provide a sine, binary, or other signal, and as illustrated, it is labeled as providing a "binary signal A." Thus, generator 33 would provide a binary signal voltage as a sequence of discrete voltage pulses varying between zero voltage and some discrete voltage, which may be representative of letters or numerical values or simply a random one. By virtue of the thus described input combination, the output of comparator 28 would rise to a positive saturation level when triangular wave signal 40 (waveform E) is of a higher value than the effective modulation signal 42 and drop to a negative saturation level when modulation signal 42 is of a greater value than the triangular wave signal 40. The output signal of comparator 28 is shown in waveform F, and the effect is to vary the turn-on and turn-off of the pulses shown in this waveform as a function of the combination of the intelligence and dither signal where one is employed. Thus, there is effected a pulse position modulation from an amplitude signal. The dither signal enables an added discrete pattern of time positions to be included to a transmitted signal, thus requiring that to receive and demodulate it, the dither signal be accurately reproduced.

With respect to the output signal of comparator 28, we are interested in employing a negative going or trailing edge 44 of it, and it is to be noted that this trailing edge will vary in its time position as a function of the signal modulation. This trailing edge of the waveform, in waveform F, triggers "on" mono, or monostable multivibrator, 46 having an "on" time of approximately 50 nanoseconds, and its output is shown in waveform G. For purposes of illustration, while the pertinent leading or trailing edges of related waveforms are properly aligned, pulse widths and spacings (as indicated by break lines, spacings are 40 microseconds) are not related in scale. Thus, the leading edge of pulse waveform G corresponds in time to the trailing edge 44 (waveform F) and its time position within an average time between pulses of waveform G is varied as a function of the input modulation signal to comparator 28.

The output of mono 46 is applied through diode 48 across resistor 50 to the base input of NPN transistor 52 operated as a triggering amplifier. It is conventionally biased through resistor 54, e.g., 1.5K ohms, from +5 volt terminal 29 of 5 volt power supply 30 to its collector. Capacitor 56 having an approximate capacitance of 0.1 mf is connected between the collector and ground of transistor 52 to enable full bias potential to appear across the transistor for its brief turn-on interval, 50 nanoseconds. The output of transistor 52 is coupled between its emitter and ground to the primary 58 of trigger transformer 60. Additionally, transistor 52 may drive transformer 60 via an avalanche transistor connected in a common emitter configuration via a collector load resistor. In order to drive transformer 60 with a steep wave front, an avalanche mode operated transistor is ideal. Identical secondary windings 62 and 64 of trigger transformer 60 separately supply base-emitter inputs to NPN avalanche, or avalanche mode operated, transistors 66 and 68 of power output stage 18. Although two are shown, one or more than two may be employed when appropriately coupled.

With avalanche mode operated transistors 66 and 68, it has been found that such mode is possible from a number of types of transistors not otherwise labeled as providing it, such as a 2N2222, particularly those with a metal can. The avalanche mode referred to is sometimes referred to as a second breakdown mode, and when transistors are operated in this mode and are triggered "on," their resistance rapidly goes quite low (internally at near the speed of light), and they will stay at this state until collector current drops sufficiently to cut off conduction (at a few microamperes). Certain other transistors, such as a type 2N4401, also display reliable avalanche characteristics.

As illustrated, impulse antenna 200 is charged by a D.C. source 65 through resistors 67 and 69 to an overall voltage which is the sum of the avalanche voltage of transistors 66 and 68 as discussed above. Resistors 67 and 69 together have a resistance value which will enable transistors 66 and 68 to be biased as described above. Resistors 71 and 73 are of relatively low value and are adjusted to receive energy below the frequency of cut-off of the antenna. In operation, when a pulse is applied to the primary 58 of pulse transformer 60, transistors 66 and 68 are turned on, effectively shorting, through resistors 71 and 73, antenna elements 204 and 206. This action occurs extremely fast, with the result that a signal is generated generally as shown in pulse waveform G (but somewhat rounded). Antenna 200 differentiates the pulse G to transmit essentially a monocycle of the general shape shown in waveform H.

Fig. 1b illustrates an alternate embodiment of a transmitter output stage. It varies significantly from the one shown in Fig. 1a in that it employs a light responsive avalanche transistor 63, e.g., a 2N3033. Similar components are designated with like numerical designations to that shown in Fig. 1 but with the suffix "a" added. Transistor 63 is triggered by laser diode or fast turn-on LED (light emitting diode) 61, in turn driven by avalanche transistor 52 generally operated as shown in Fig. 1. By employment of a light activated avalanche or other avalanche mode operated semiconductor switches (now existing or soon appearing), or a series of them connected in series, it appears that the voltage for power source 65 may be elevated into the multi-kilovolt range, thus enabling a power output essentially as high as desired. In this respect, and as a particular feature of this invention, a light triggered, gallium arsenide, avalanche mode operated switch would be employed.

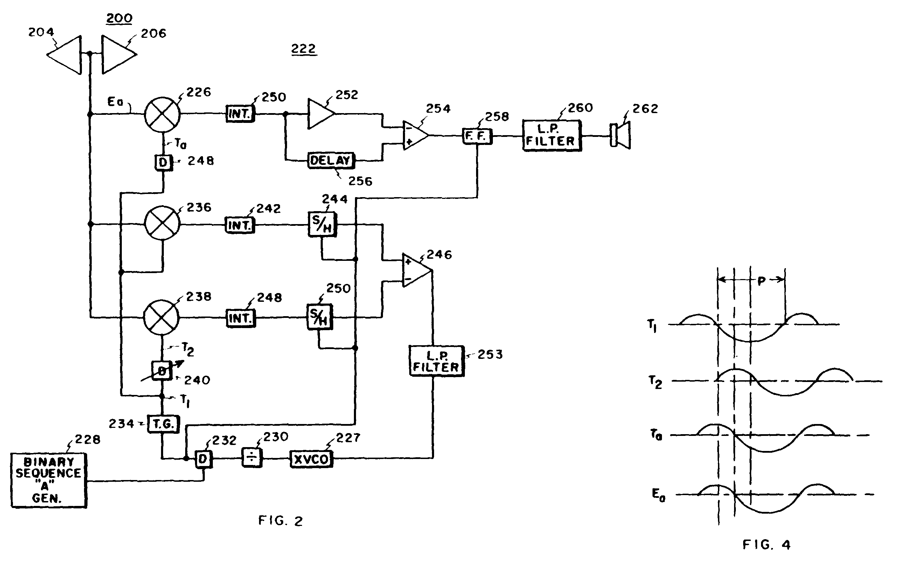

Referring back to Fig. 1, the output of monocycle producing antenna 200, with elements 204 and 206, is typically transmitted over a discrete space and would typically be received by a like broadband antenna, e.g., antenna 200 of a receiver at a second location (Fig. 2).

Fig. 2 illustrates a radio receiver which is particularly adapted to receive and detect a time domain transmitted signal. In addition, it particularly illustrates a system for detecting intelligence which has been mixed with a particular offset or dither signal, analog or digital, such as providing by binary sequence "A" generator 33 shown in Fig. 1. It will thus be presumed for purposes of description that switch 39 of Fig. 1 is closed and that the signal transmitted by transmitter 10 is one wherein intelligence signals from microphone 34 are summed with the output of binary sequence "A" generator 33, and thus that the pulse position output of transmitter 10 is one wherein pulse position is a function of both intelligence and offset or dither signals. Thus, the transmitted signal may be described as a pulse position modulated signal subjected to changes in pulse position as effected by a time offset pattern of the binary sequence "A."

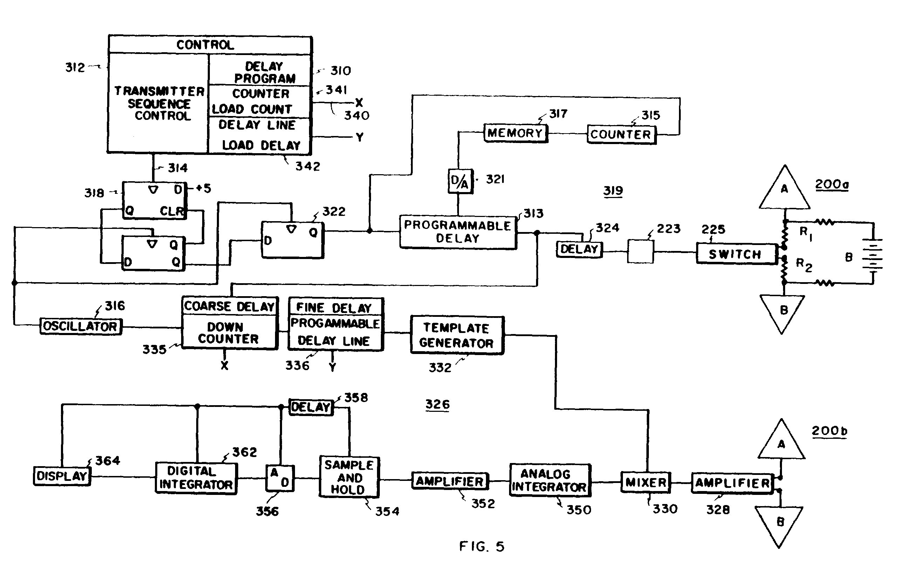

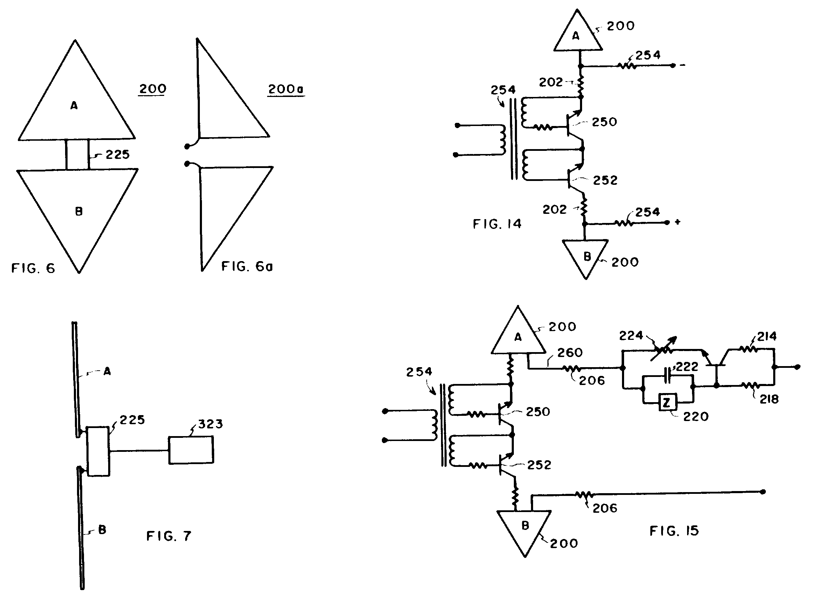

The transmitted signal from transmitter 10 is received by antenna 200 (Fig. 2), and this signal is fed to two basic circuits, demodulation circuit 222 and template generator 224. In accordance with this system, a replica of the transmitted signal, waveform H (Fig. 4), is employed to effect detection of the received signal, basic detection being accomplished in multiplier or multiplying mixer 226. For maximum response, the template signal, reproduced as waveform T1 in Fig. 4, must be applied to mixer 226 closely in phase with the input, as will be further described. It will differ by a magnitude not perceptible in the waveforms of Fig. 6 as a function of modulation, effecting swings of approximately ±200 picoseconds, typically for a 1 nanosecond pulse. To accomplish such near synchronization, template generator 224 employs a crystal controlled but voltage controlled oscillator 227 which is operated by a control voltage which synchronizes its operation in terms of the received signal.

Oscillator 227 operates at a frequency which is substantially higher than the repetition rate of transmitter 10, and here it's output is divided down to the operating frequency of 25 KHz by frequency divider 230, thus equal to the output of divider 14 of transmitter 10.

In order to introduce a pattern of dither corresponding to that provided by binary sequence "A" generator 33, a like generator 228 provides a binary changing voltage to programmable delay circuit 232 which applies to the signal output of divider 230 a delay pattern corresponding to the one effected by binary sequence "A" generator 33 of Fig. 1 when added to intelligence modulation. Thus, for example, this might be four 8-bit binary words standing for the numerals 4, 2, 6, and 8, the same pattern having been generated by binary sequence "A" generator 33 and transmitted by transmitter 10. It is further assumed that this is a repeating binary pattern. Thus, programmable delay 232 will first delay a pulse it receives from divider 230 by four units. Next, the same thing would be done for the numeral 2 and so on until the four numeral sequence has been completed. Then, the sequence would start over. In order for the two binary sequence generators to be operated in synchronization, either the start-up time of the sequence must be communicated to the receiver, or else signal sampling would be for a sufficient number of signal input pulses to establish synchronization by operation of the synchronization system, as will be described. While a repeatable sequence is suggested, it need not be such so long as there is synchronization between the two generators, as by transmission of a sequence start signal and the provision in the receiver of means for detecting and employing it.

Either programmable delay 232 or a second delay device connected to its output would additionally provide a general circuit delay to take care of circuit delays which are inherent in the related circuitry with which it is operated, as will be described. In any event, the delayed output of delay 232, which is a composite of these, will be provided to the input of template generator 234, and it is adapted to generate a replica of the transmitted signal, illustrated in Fig. 4 as waveform T1. Differential amplifier 246 basically functions to provide a D.C. voltage as needed to apply a correction or error signal to oscillator 227 as will enable there to be provided to mixer 226 replica signal Ti exactly in phase with the average time of input signal EA.

In order to generate the nearest signal, the input signal EA is multiplied by two spaced, in time, replicas of the template signal output of template generator 234. The first of these, indicated as T1, is multiplied in mixer 236 by input signal EA and a second template signal T2 is multiplied by the input signal EA in mixer 238. As will be noted in Fig. 6, T2 is delayed from signal Ti by delay 240 by a period of essentially one-half of the duration of the major lobe P of template signal T1.

The output of mixer 236 is integrated in integrator 242, and its output is sampled and held by sample and hold unit 244 as triggered by delay 232. The output of sample and hold unit 244, the integral of the product of the input signal EA and IT1, is applied to the non-inverting input of differential amplifier 246. Similarly, the output of mixer 238 is integrated by integrator 248 and sampled and held by sample and hold 250 as triggered by delay 232, and the integrated product of the input signal EA and template signal T2 is applied to the inverting input of differential amplifier 246.

To examine the operation of differential amplifier 246, it will be noted that if the phase of the output of oscillator 22 should advance, signals T1 and Ei applied to mixer 236 would become closer in phase, and their product would increase, resulting in an increase in input signal to the non-inverting input of differential amplifier 246, whereas the advance effect on template signal T2 relative to the input signal Ei would be such that their coincidence would decrease, causing a decrease in the product output of mixer 238 and therefore a decreased voltage input to the inverting input of differential amplifier 246. As a result, the output of differential amplifier 246 would be driven in a positive direction, and this polarity signal would be such as to cause oscillator 227 to retard. If the change were in the opposite direction, the result would be such that higher voltages would be applied to the inverting input than to the non-inverting input of differential amplifier 246, causing the output signal to decrease and to drive oscillator 227 in an opposite direction. In this manner, the near average phase lock is effected between the input signal EA and template signal TA which is directly employed in the modulation of the input signal. The term "near" is used in that the output of differential amplifier 246 is passed through low pass filter 253 before being applied to the control input of oscillator 227. The cut-off frequency of low pass filter 253 is set such that it will take a fairly large number of pulses to effect phase shift (e.g., 10 to perhaps down to 0.001 Hz). As a result, the response of oscillator 227 is such that it provides an output which causes waveform T1 and thus waveform TA to be non-variable in position with respect to modulation effect. With this limitation in mind, and in order to obtain a synchronous detection of the input signal, the output T1 of template generator 234 is delayed by a period equal to essentially one-fourth the period P of the major lobe of the template and input signal, and this is applied as signal TA with the input signal EA to multiplying mixer 226. As will be noted, the resulting delayed signal, TA, is now near synchronization with the input signal EA, and thus the output of multiplier 226 provides essentially a maximum signal output. In instances where there is simply no signal, or a noise signal, at the signal input of mixer 226, there would be between input signals EA an elapsed time of exactly 40 milliseconds shown in Fig. 4, and a quite minimum time deviation in output would appear from mixer 226.

The signal output of mixer 226 is integrated in integrator 250, and the output signal is multiplied by a factor of 0.05 by amplifier 252. Then this one-half voltage output of amplifier 252 is applied to the inverting input of comparator 254, and this voltage represents one-half of the peak output of integrator 250. At the same time, a second output of integrator 250 is fed through delay 256 to the non-inverting input of comparator 254, delay being such as required for stablization of the operation of amplifier 252 and comparator 254 in order to obtain an effective comparison signal level that will be essentially free of the variable operation of these two units. The output of comparator 254 represents an essentially precise time marker which varies with the position of input signal EA. It is then fed to the reset input of flip-flop 258, a set input being provided from the output of delay 232 which represents, because of low pass filter 253, an averaged spacing between input signals, thus providing a reference against which the modulation controlled time variable output signal of comparator 254 may be related. It is related by virtue of the output of delay 232 being provided as the set input to flip-flop 258. Thus, for example, the output of flip-flop 258 would rise at a consistent time related to the average repetition rate as essentially dictated by low pass filter 253. Thus, the output of flip-flop 258 would be brought back to zero at a time which reflected the intelligence modulation on the input signal. Thus, we would have a pulse height of a constant amplitude but with a pulse width which varied directly with modulation. The output of flip-flop 258 is then fed through low pass filter 260, which translates the signal from pulse width demodulation and amplitude signal modulation, which is then reproduced by loudspeaker 262.

Assuming that binary sequence generator 33 of transmitter 10 and binary sequence "A" generator 228 for the receiver are operated essentially in synchronization, the effect of the time position dither effected by generator 33 of transmitter 10 will have no dislocating effect on the signal.

As suggested above, in order to ensure synchronization, some form of signaling between the transmitter and receiver as to the starting of the binary sequence generator, generator 33, is required. This may be done by an auxiliary transmitter or by a decoding arrangement wherein there would be provided at the conclusion of, say, one sequence of binary sequence generator 33, a start signal for binary sequence generator 228 of the receiver. Absent this, in the free running mode, there would be effected synchronization by the operation of template generator 224 which for short codes, and with relatively low noise levels, would be relatively short, and for longer codes, or instances where noise was a significant problem, longer periods would be required for synchronization. Where needed, a receiving station might transmit back to the original transmitting station an acknowledgment that synchronization has been achieved.

From the foregoing, it should be appreciated that the applicant has provided both an inexpensive and practical time domain system for communications. While a system has been described wherein a single short pulse, for example, a nanosecond, is transmitted at a repetition rate such that 40 microseconds is between pulses, the invention contemplates that a group of pulses might be sent which would be separated by the longer period. Thus, for example, an 8-bit set might be transmitted as a group wherein there was simply room between the pulses to detect their multiposition shifts with modulation. By this arrangement, it is to be appreciated that intelligence information transmitted would be increased by up to 256 times, or the immunity from noise could be substantially improved by this technique and related ones.

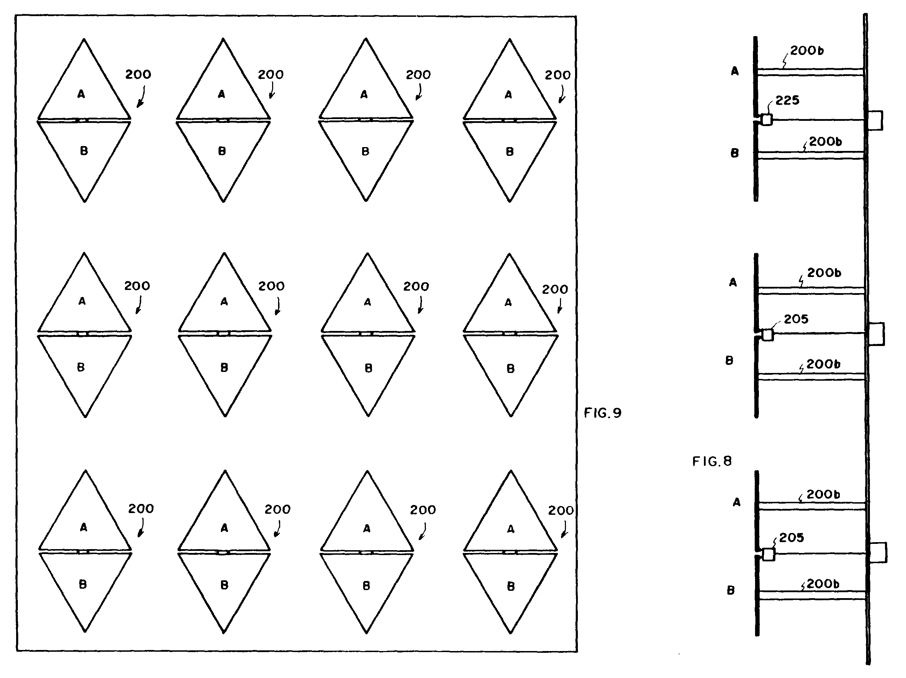

Fig. 5 particularly illustrates a radar system of the present invention for determining range. Impulse-responsive, or impulse, antenna 200, or antenna 201 as shown in Fig. 6a, of transmitter 239 comprises triangular elements A and B with closely spaced, 0.127cm (0.050 inches), bases. A dimension of a base and a dimension normal to the base of each element is approximately 11.43cm 4-1/2 inches) and is further discussed and illustrated with respect to Figs. 6 and 7. Typically, a reflector would be used as illustrated in Fig. 8. Alternately, as shown in Fig. 6a, a base is reduced to 5.715cm (2-1/4 inches) wherein the elements are halved as shown in Fig. 6a. Significantly, however, the length of path from a feed point to an edge is the same in both cases.

The transmitter is basically controlled by control 310. It includes a transmit sequence control portion 312 which determines the timing of transmitted signal bursts, at, for example, 10,000 bursts per second, in which case transmit sequence control 312 generates an output at 10,000 Hz on lead 314. Oscillator 316 is operated at a higher rate, for example, 20 MHz.

The signal output of transmit sequence control 312 is employed to select particular pulse outputs of oscillator 316 to be the actual pulse which is used as a master pulse for controlling both the output of transmitter 318 and the timing of receiver functions, as will be further described. In order to unambiguously and repetitively select an operative pulse with low timing uncertainty from oscillator 316, the selection is one and some fraction of an oscillator pulse interval after an initial signal from control 312. The selection is made via a control sequence employing D-type flip-flops 318, 320, and 322. Thus, the transmit sequence control pulse on lead 314 is applied to the clock input of flip-flop 318. This causes the Q output of flip-flop 318 to transition to a high state, and this is applied to a D input of flip-flop 320. Subsequently, the output of oscillator 316 imposes a rising edge on the clock input of flip-flop 320. At that time, the high level of the D input of this flip-flop is transferred to the Q output. Similarly, the Q output of flip-flop 320 is provided to the D input of flip-flop 322, and the next rising edge of the pulse from oscillator 316 will cause the not Q output of flip-flop 322 to go low and thus initiate the beginning of the transmit-receive cycle.

For the transmit mode, the not Q output of flip- flop 322 is fed as an input to analog programmable delay 313 and to counter 315. Counter 315, for example, would respond to the not Q outputs of flip-flop 322 and count up to a selected number, for example, 356, and recycle to count again. Its binary output would be fed as an address to memory unit 317, ROM or RAM, which would have stored, either in numerical address order, or randomly selected order, a number. As a result, upon being addressed, a discrete output number would be fed to D/A converter unit 321. D/A converter unit 321 would then provide an analog signal output proportional to the input number. This output is employed to sequentially operate programmable delay unit 313 for delays of pulses from flip-flop 322 by an amount proportional to the signal from D/A converter 321. The range of delays would typically be up to the nominal timing between pulses, in this case, up to 300 nanoseconds, and practically up to 99 nanoseconds. The delayed output of programmable delay unit 313 is then fed to fixed delay unit 324 which provides a fixed delay of 200 nanoseconds to each pulse that it receives. The thus delayed pulses are then fed to trigger generator 223. Trigger generator 223, e.g., an avalanche mode operated transistor, would provide a sharply rising electrical output at the 10,000 Hz rate or a like response of light output, e.g., by laser, depending upon the transmitter to be driven. In accordance with one feature of this invention, trigger generator 223 would be an ultraviolet laser. In any event, a pulse of trigger generator 223 is fed to and rapidly turns on a switch 335 which, for example, may again be an electrically operated or light operated switch, such as a diamond switch in response to the ultraviolet laser triggering device via fiber optic 327.
Importantly, it must be capable of switching in a period of a nanosecond or less. It is then switched on to discharge antenna 200, having earlier been charged from power source B through resistors R1 and R2, source B being, for example, 100 to 5,000 volts.

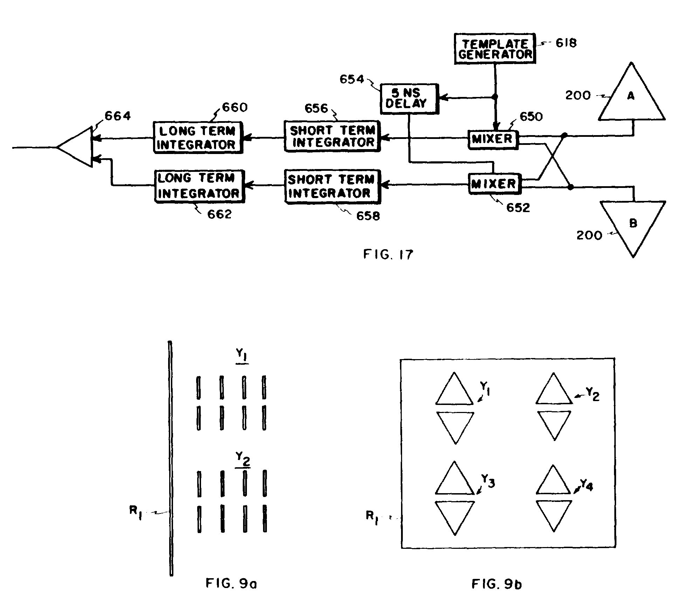

Conformal impulse antenna 200 or 200a (Fig. 6a) is turned on or turned off, or successively both, by switch assembly 315 which applies stepped voltage changes to the antenna. It responds by transmitting essentially short burst signals 329 each time that it is triggered. These burst signals are then transmitted into space via a directional version of antenna 200 as illustrated in Figs. 8 and 9 or simply by an omnidirectional antenna as shown by antenna 200 in Fig. 1 o4 200a in Fig. 6a.

Signal returns from a target would be received by receiver 326, typically located near or together with transmitter 319, via receiving antenna 200 which would, for example, be like a transmitting antenna. The received signals are amplified in amplifier 328 and fed to mixer 330, together with a signal from template generator 332, driven by delay line 336, which is timed to produce signals, typically half cycles in configuration, and corresponding in time to the anticipated time of arrival of a signal from a target at a selected range.

Mixer 330 functions to multiply the two input signals, and where there are coincidence signals, timewise and with like or unlike polarity coincident signals, there is a significant and integratable output, indicating a target at the range. A mixer and the following circuitry may be reused for later arriving signals representative of different range, this range or time spacing being sufficient to complete processing time for reception and integration at a range as will be described. Additional like mixtures and following circuitry sets may be employed to fill in the range slots between that capable for one set.

Since the goal here is to determine the presence or absence of a target based on a number of signal samplings as effected by integration, where a true target does not exist, the appearance of signals received by mixer 330 corresponding to the time of receipt of signals from template generator 332 will typically produce signals which vary not only in amplitude but also in polarity. It is to be borne in mind that the present system determines intelligence, not instantaneously, but after a period of time, responsive to a preponderance of coherent signals over time time, a facet of time domain transmissions. Next, it is significant that the template generator produce a template signal burst which is no longer than the effecting signal to be received and bear a consistent like or opposite polarity relationship in time with it. As suggested above, received signals which do not bear this relation to the template signal will be substantially attenuated. As one signal, the template signal is simply a one polarity burst signal. Assuming that it maintains the time relationship described, effective detection can be effected.

For purposes of illustration, we are concerned with looking at a single time slot for anticipated signal returns following signal bursts from transmitting antenna 200 or 200a. Accordingly, template generator 332 is driven as a function of the timing of the transmitter. To accomplish this, coarse delay counter 335 and fine delay programmable delay line 336 are employed. Down counter 335 counts down the number of pulse outputs from oscillator 216 which occur subsequent to a control input on lead 338, the output of programmable delay unit 313. A discrete number of pulses thereafter received from oscillator 316 is programmable in down counter 335 by an output X from load counter 341 on lead 340 of control 310, a conventional device wherein a binary count is generated in control 310 which is loaded into down counter 335. As an example, we will assume that it is desired to look at a return which occurs 175 nanoseconds after the transmission of a signal from antenna 200a. To accomplish this, we load into down counter 335 the number "7," which means it will count seven of the pulse outputs of oscillator 216, each being spaced at 50 nanoseconds. So there is achieved a 350-nanosecond delay in down counter 335, but subtracting 200 nanoseconds as injected by delay unit 324, we will have really an output of down counter 335 occurring 150 nanoseconds after the transmission of a burst by transmitting antenna 200 or 200a. In order to obtain the precise timing of 175 nanoseconds, an additional delay is effected by programmable delay line 336, which is triggered by the output of down counter 335 when its seven count is concluded. It is programmed in a conventional manner by load delay 342 of control 310 on lead Y and, thus in the example described, would have programmed programmable delay line 336 to delay an input pulse provided to it by 25 nanoseconds. In this manner, programmable delay line 336 provides a pulse output to template generator 332, 175 seconds after it is transmitted by transmitting antenna 200. Template generator 332 is thus timed to provide, for example, a positive half cycle or square wave pulse to mixer 330 or a discrete sequence or pattern of positive and negative excursions.

The output of mixer 330 is fed to analog integrator 350. Assuming that there is a discrete net polarity likeness or unlikeness between the template signal and received signal during the timed presence of the template signal, analog integrator 350, which effectively integrates over the period of template signal, will provide a discrete voltage output. If the signal received is not biased with a target signal imposed on it, it will generally comprise as much positive content as negative content on a time basis; and thus when multiplied with the template signal, the product will follow this characteristic, and likewise, at the output of integrator 350, there will be as many discrete products which are positive as negative. On the other hand, with target signal content, there will be a bias in one direction or the other, that is, there will be more signal outputs of analog integrator 350 that are of one polarity than another. The signal output of analog integrator 350 is amplified in amplifier 352 and then, synchronously with the multiplication process, discrete signals emanating from analog integrator 350 are discretely sampled and held by sample and hold 354. These samples are then fed to A/D converter 356 which digitizes each sample, effecting this after a fixed delay of 40 microseconds provided by delay unit 358, which takes into account the processing time required by sample and hold unit 354. The now discrete, digitally calibrated positive and negative signal values are fed from A/D converter 356 to digital integrator 362 which then digitally sums them to determine whether or not there is a significant net voltage of one polarity or another, indicating, if such is the case, that a target is present at a selected range. Typically, a number of transmissions would be effected in sequence, for example, 10, 100, or even 1,000 transmissions, wherein the same signal transit time of reception would be observed, and any signals occurring during like transmissions would then be integrated in digital integrator 362, and in this way enable recovery of signals from ambient, non-synchronized signals which, because of random polarities, do not effectively integrate.

The output of digital integrator 362 would be displayed on display 364, synchronized in time by an appropriate signal from delay line 336 (and delay 358) which would thus enable the time or distance position of a signal return to be displayed in terms of distance from the radar unit.

Figs. 6 and 7 illustrate side and front views of an antenna 200. As is to be noted, antenna elements A and B are triangular with closely adjacent bases and switch 225 connects close to the bases of the elements as shown. As an example, and as described above, it has been found that good quality burst signals can be radiated from impulses having a stepped voltage change occurring in one nanosecond or less wherein the base of each element is approximately 11.43cm (4-1/2 inches) and the height of each element is approximately the same. Alternately, the antenna may be, as in all cases, like that shown in Fig. 6a where antenna 200a is sliced in half to have a base dimension of 5.715cm (2-1/4 inches). Either of the antennas illustrated in Figs. 6, 7, or 6a may be employed as antennas in any of the figures.

Figs. 8 and 9 diagrammatically illustrate an antenna assembly wherein a multiple, in this case, 16, separate antenna element sets, for example, as antenna 200, are employed, each being spaced forward of a metal reflector 200a by a distance of approximately 7.62cm (3 inches), for a 22.86cm (9 inches) tip-to-tip antenna element dimension. The antennas are supported by insulating standoffs 300b, and switches 325 (transmitting mode) are shown to be fed by triggering sources 323 which conveniently can be on the back side of reflector 300a, and thus any stray radiation which might tend to flow back beyond this location to a transmission line is effectively shielded. The multiple antennas may be operated in unison, that is, all of them being triggered (in the case of a transmitter) and combined (in the case of a receiver) with like timing, in which case the antenna would have a view or path normal to the antenna array or surface of reflector as a whole. Alternately, where it is desired to effect beam steering, the timing by combination, or triggering devices (receiving or transmitting) would be varied. Thus, for example, with respect to reception, while the outputs of all of the antennas in a column might be combined at a like time point, outputs from other columns might be delayed before a final combination of all signals. Delays can simply be determined by lead lengths, and, in general, multiple effects are achievable in almost limitless combinations.

Alternately, antenna elements may arranged in a end-fire format wherein each element is driven with or

without a reflector. They may be arrayed as illustrated in Figs. 9a and 9b wherein four end-fire units Y1, Y2, Y3, and Y4 are employed and positioned in front of a common reflector. Alternately, the reflector may be omitted, and further alternately, an absorber may be positioned beyind the array to absorb back waves.

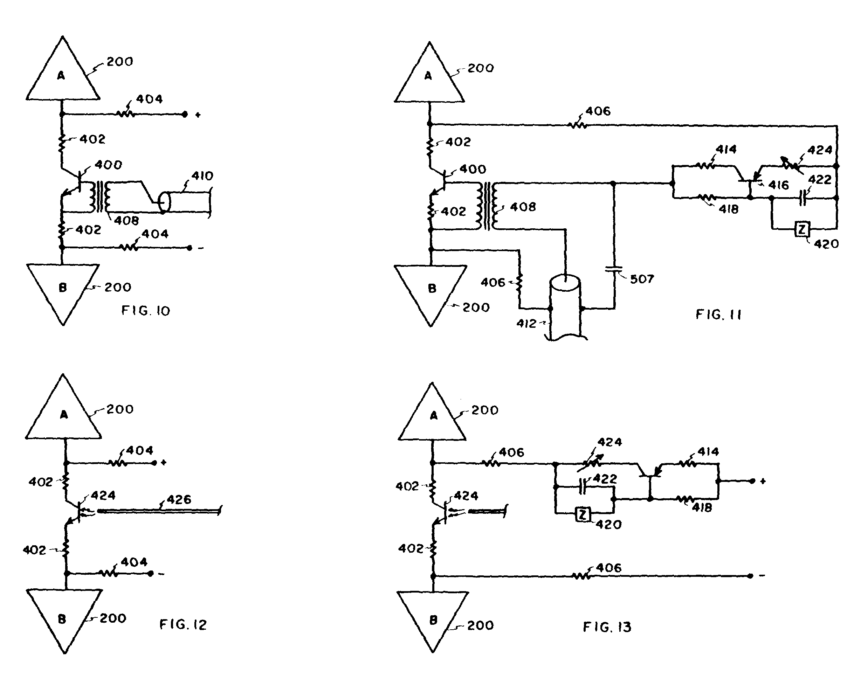

Fig. 10 diagrammatically illustrates a transmitting switch wherein the basic switching element is an avalanche mode operated transistor 400, the emitter and collector of which are connected through like resistors 402 to antenna elements A and B of antenna 200, the resistors being, for example, 25 ohms each (for an antenna as shown in Fig. 6a, it would be doubled). In the time between the triggering on of avalanche transistor 400, it is charged to a D.C. voltage, e.g., 150 volts, which is coordinate with the avalanche operating point of transistor 400. Charging is effected from plus and minus supply terminals through like resistors 404 to antenna elements A and B. The primary of pulse transformer 408 is supplied a triggering pulse, as from trigger circuit 323 of Fig. 5, and its secondary is connected between the base and emitter of transistor 400. Typically, the transmission line for the triggering pulse would be in the form of a coaxial cable 410. When triggered on, transistor 400 shorts antenna elements A and B and produces a signal transmission from antenna 200 (or antenna 200a).

Fig. 11 illustrates a modified form of applying a charging voltage to antenna elements A and B, in this case, via a constant current source, and wherein the charging voltage is supplied across capacitor 409 through coaxial cable 412, which also supplies a triggering voltage to transformer 408, connected as described above. For example, the plus voltage is supplied to the inner conductor of coaxial cable 412, typically from a remote location (not shown). This voltage is then coupled from the inner conductor of the coaxial cable through the secondary of pulse transformer 408 and resistor 414, e.g., having a value of 1K ohms, to the collector of a transistor 416 having the capability of standing the bias voltage being applied to switching transistor 400 (e.g., 150 volts). The plus voltage is also applied through resistor 418, for example, having a value of 220K ohms, to the base of transistor 416. A control circuit to effect constant current control is formed by a zenar diode 420, across which is capacitor 422, this zenar diode setting a selected voltage across it, for example, 7-1/2 volts. This voltage is then applied through a variable resistor 424 to the emitter of transistor 416 to set a constant voltage between the base and emitter and thereby a constant current rate of flow through the emitter-collector circuit of transistor 416, and thus such to the antenna. Typically, it is set to effect a full voltage charge on antenna 200 in approximately 90% of the time between switch discharges by transistor 400. The thus regulated charging current is fed through resistors 406 to antenna elements A and B. In this case, discharge, matching, load resistors 402 are directly connected between transistor 400 and antenna elements A and B as shown.

Fig. 12 illustrates the employment of a light responsive element as a switch, such as a light responsive avalanche transistor 424, alternately a bulk semiconductor device, or a bulk crystalline material such as diamond, would be employed as a switch, there being switching terminals across, on opposite sides of, the bulk material. The drive circuit would be similar to that shown in Fig. 10 except that instead of an electrical triggering system, a fiber optic 426 would provide a light input to the light responsive material, which would provide a fast change from high to low resistance between terminals to effect switching.

Fig. 13 bears similarity to both Figs. 11 and 12 in that it employs a constant current power source with light responsive switching element 424, such as a light responsive transistor, as shown. Since there is no coaxial cable for bringing in triggering signals, other means must be provided for bias voltage. In some applications, this may simply be a battery with a D.C. to D.C. converter to provide the desired high voltage source at plus and minus terminals.

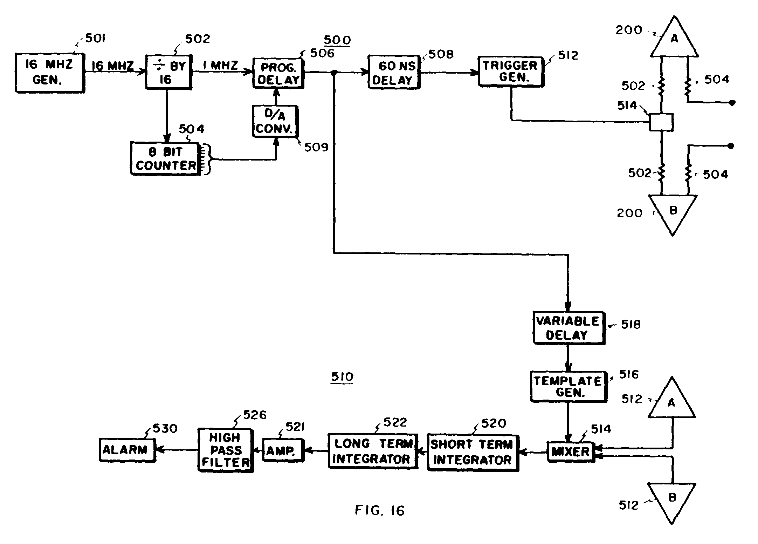

Figs. 14 and 15 illustrate the employment of multiple switching elements, actually there being shown in each figure two avalanche mode operated transistors 450 and 452 connected collector-emitter in series with resistors 402 and antenna elements A and B. As will be noted, separate transformer secondary windings of trigger transformer 454 are employed to separately trigger the avalanche mode transistors. The primary winding of a transformer would typically be fed via a coaxial cable as particularly illustrated in Fig. 10. Antenna elements A and B (either 200 or 200a) are charged between occurrences of discharge from plus and minus supply terminals, as shown.

Fig. 13 additionally illustrates the employment of a constant current source as described for the embodiment shown in Figs. 10 and 7. Actually, the system of feeding the constant current source through coaxial cable as shown in Fig. 9 can likewise be employed with the circuitry shown in Fig. 14.

Referring to Fig. 16, there is illustrated a radar system particularly intended for facility surveillance, and particularly for the detection of moving targets, typically people. Transmitter 500 includes a 16 MHz clock signal which is generated by signal generator 501. This signal is then fed to divide-by-16 divider 402 to provide output signals of 1 MHz. One of these 1 MHz outputs is fed to 8-bit counter 504 which counts up to 256 and repeats. The other 1 MHz output of divide-by-16 divider 502 is fed through a programmable analog delay unit 506 wherein each pulse is delayed by an amount proportional to an applied analog control signal. Analog delay unit 506 is controlled by a magnitude of count from counter 504, which is converted to an analog voltage proportional to this count by D/A converter 509 and applied to a control input of analog delay unit 506.

By this arrangement, each of the 1 MHz pulses from divide-by-16 divider 502 is delayed a discrete amount. The pulse is then fed to fixed delay unit 508 which, for example, delays each pulse by 60 nanoseconds in order to enable sufficient processing time of signal returns by receiver 510. The output of fixed delay unit 508 is fed to trigger generator 512, for example, an avalanche mode operated transistor, which provides a fast rise time pulse. Its output is applied to switch 514, typically an avalanche mode operated transistor as illustrated in Fig. 10 or 11. Antenna 200 (or 200a) is directly charged through resistors 504 from a capacitor 507 (Fig. 11) which generally holds a supply voltage provided at the plus and minus terminals.

Considering now receiver 510, antenna 512, identical with antenna 200 or 200a, receives signal returns and supplies them to mixer 514. Mixer 514 multiplies the received signals from antenna 512 with locally generated ones from template generator 516. Template generator 516 is triggered via a delay chain circuitry of analog delay unit 506 and adjustable delay unit 518, which is set to achieve a generation of a template signal at a time corresponding to the sum of delays achieved by fixed delay 508 and elapsed time to and from a target at a selected distance. The output of mixer 514 is fed to short-term analog integrator 520 which discretely integrates for the period of each template signal. Its output is then fed to long-term integrator 522 which, for example, may be an active low-pass filter and integrates over on the order of 50 milliseconds, or, in terms of signal transmissions, up to, for example, approximately 50,000 such transmissions. The output of integrator 522 is amplified in amplifier 524 and passed through adjustable high-pass filter 526 to alarm 530. By this arrangement, only A.C. signals corresponding to moving targets are passed through the filters and with high-pass filter 526 establishing the lower velocity limit for a target and low-pass filter 528 determining the higher velocity of a target. For example, high-pass filter 526 might be set to pass signals from targets at a greater velocity than 0.1 feet per second and integrator-low-pass filter 522 adapted to pass signals representing targets moving less than 50 miles per hour. Assuming that the return signals pass both such filters, alarm visual, would be operated.

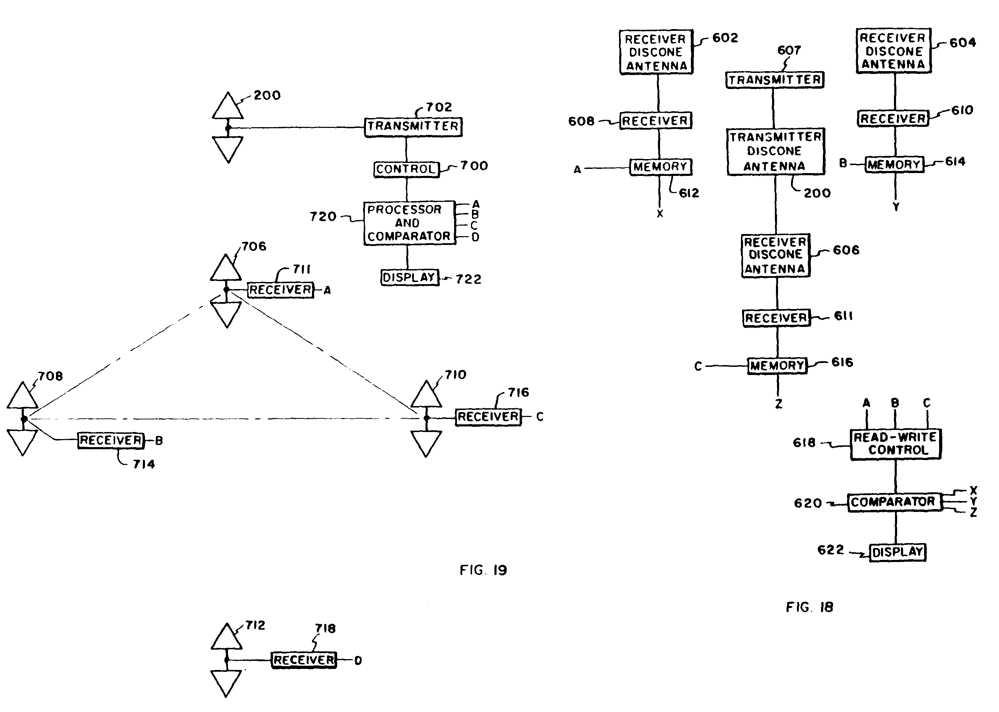

Fig. 17 illustrates a modification of Fig. 16 for the front-end portion of receiver 610. As will be noted, there are two outputs of antenna 200, one to each of separate mixers 650 and 652, mixer 650 being fed directly an output from template generator 618, and mixer 652 being fed an output from template generator 618 which is delayed 0.5 nanosecond by 0.5 nanosecond delay unit 654. The outputs of mixers 650 and 652 are then separately integrated in short-term integrators 656 and 658, respectively. Thereafter, the output of each of these short-term integrators is fed to separate long-term integrators 460 and 462, after which their outputs are combined in differential amplifier 664. The output of differential amplifier 664 is then fed to high-pass filter 626 and then to alarm 630, as discussed above with respect to Fig. 16. Alternately, a single long-term integrator may replace the two, being placed after differential amplifier 664.

By this technique, there is achieved real time differentiation between broad boundary objects, such as trees, and sharp boundary objects, such as a person. Thus, assuming that in one instant the composite return provides a discrete signal and later, for example, half a nanosecond later, there was no change in the scene, then there would be a constant difference in the outputs of mixers 650 and 652. However, in the event that a change occurred, as by movement of a person, there would be changes in difference between the signals occurring at the two different times, and thus there would be a difference in the output of differential amplifier 564. This output would then be fed to high-pass filter 526 (Fig. 12) and would present a discrete change in the signal which would, assuming that it met the requirements of high-pass and low-pass filters 526 and 528, be signalled by alarm 530.

In terms of a system as illustrated in Fig. 16, it has been able to detect and discriminate very sensitively, sensing when there was a moving object within the bounds of velocities described and within the range of operation, several 30m (100 feet) or more. For example, movement of an object within approximately a ± 0.3m (1 foot) range of a selected perimeter of measurement is examinable, leaving out sensitivity at other distances which are neither critical nor desirable in operation. In fact, this feature basically separates the operation of this system from prior systems in general as it alleviates their basic problem: committing false alarms. Thus, for example, the present system may be positioned within a building and set to detect movement within a circular perimeter within the building through which an intruder must pass. The system would be insensitive to passersby just outside the building. On the other hand, if it is desirable to detect people approaching the building, or, for that matter, approaching objects inside or outside the building, then it is only necessary to set the range setting for the perimeter of interest. In general, walls present no barrier. In fact, in one test, an approximately 1.20m (4 feet) thickness of stacked paper was within the perimeter. In this test, movement of a person just on the other side of this barrier at the perimeter was detected.

While the operation thus described involves a single perimeter, by a simple manual or automatic adjustment, observations at different ranges can be accomplished. Ranges can be in terms of a circular perimeter, or, as by the employment of a directional antenna (antenna 200 with a reflector) or yagi-type array, effect observations at a discrete arc.

Fig. 18 illustrates an application of applicant's radar to a directional operation which might cover a circular area, for example, from 6m (20 feet) to 9m (30 feet) to several 300m (1000 feet) in radius. In this illustration, it is assumed that there is positioned at a selected central location a transmit antenna, in this case, oriented vertically as a non-directional, or omnidirectional, antenna 700. There are then positioned at 120° points around it like received antennas 702, 704, and 706. An antenna, e.g., 200, as previously described, is powered by a trigger switch transmitter 707. Assuming that a single signal burst is transmitted from transmit antenna 200, it would be radiated around 360° and into space. At some selected time as discussed above, receivers 708, 710, and 711 would be supplied a template signal as described above to thus, in effect, cause the receivers to sample a signal echo being received at that precise instant. This process would be repeated for incrementally increasing or decreasing times, and thus there would be stored in the memory's units 712, 714, and 716 signals representative of a range of transit times. Then, by selection of a combination of transit times for each of the receivers, in terms of triangularizations, it is possible to select stored signals from the memory units representative of a particular location in space. For surveillance purposes, the result of signals derived from one scan and a later occurring scan would be digitally subtracted, and thus where an object at some point within the range of the unit has moved to a new location, there will then be a difference in the scan information. This thus would signal that something may have entered the area. This process in general would be controlled by a read-write control 718 which would control the memory's units 712, 714, and 716 and would control a comparator 720 which would receive selected values X, Y, and Z from memory units 712, 714, and 716 to make the subtraction. Display 722, such as an oscilloscope, may be employed to display the relative position of an object change with respect to a radar location.

Fig. 19 illustrates an application of applicant's invention to a radar system wherein there is one transmitting antenna, e.g., antenna 200, located in a discrete plane position with respect to the direction of observation, three receiving antennas spaced in a plane parallel to the first plane, and a fourth receiving antenna positioned in a third plane. Thus, radiation from transmitting antenna 404, which is reflected by a target, is received by the four receiving antennas at varying times by virtue of the difference in path length. Because of the unique characteristic of applicant's system in that it can be employed to resolve literally inches, extreme detail can be resolved from the returns. Control 800 directs a transmission by a transmitter, e.g., 200, which supplies a signal burst to transmitting antenna 804. Signal returns are received by antennas 806, 808, and 810 and are located, for example, in a plane generally normal to the direction of view and separate from the plane in which transmit antenna 804 is located. A fourth receiving antenna 812 is located in still a third plane which is normal to the direction of view and thus in a plane separate from the plane in which the other receiving antennas are located. By virtue of this, there is provided means for locating, via triangularization, a target in space, and thus there is derived sufficient signal information to enable three-dimensional information displays. The received signals from receivers 812, 814, 816, and 818 are separately supplied to signal processor and comparator 820, which includes a memory for storing all samples received and in terms of their time of receipt. From this data, one can compute position information by an appropriate comparison as well as target characteristics, such as size and reflectivity, and can be displayed on display 822.

From the foregoing, it is to be appreciated that applicant has provided a complete impulse radar system capable of all types of communications.

## Claims

1. A time-domain transmission system comprising:
broadband antenna means including at least one dipole antenna (200a, 200b) for transmitting and receiving A.C. carrierless burst signals, in turn comprising a pair of electrically separated, triangularly contoured, when observed in a plane, elements, and wherein the bases of the pair are parallel;
a radio transmitter comprising:
pulse generating means (223) for generating a series of pulses spaced by time,
a source of D.C. power (B), and
switching means (225) responsive to said pulse generating means and coupled to said source of D.C. power and connected across said at least one dipole (200a) of said broadband antenna means for switching power between states of applied power and no applied power to said last-named at least one dipole and thereby generating a series of pulses and transmitting A.C. carrierless burst signals into space; and
radio receiving means comprising:
signal receiving means (328) coupled to said broadband antenna means (200b) for receiving said A.C. carrierless burst signals as received signals,
coherent signal generating means (322) for generating template signals which bear a time-polarity coherence with respect to said received signals,
signal mixing means (330) for multiplying said template signals and received signals and providing product signals,
integration means (350) responsive to a series of said product signals for providing an integral signal which is a selected function of the integral of a plurality of said product signals,
output means (364) responsive to a said integral signal for providing an output indicative of a correlation between said received and template signals, and
characterized in that the bases of said triangularly contoured elements (200) are adjacent.

2. A system as set forth in claim 1 wherein said pulse generating means (312, 318, 322, 313, 34) includes means for generating said pulses irregularly spaced in time in accordance with a desired pattern.

3. A system as set forth in claim 1 wherein said pulse generating means includes modulation means (22, 24) for generating spaced-in-time signals as a function of intelligence modulation.

4. A system as set forth in claim 3 wherein said system includes:
a source of intelligence signals (34); and
modulation means (22) responsive to said pulse generating means (223) and said source of intelligence signals for providing a said series of pulses spaced by time and wherein at least a discrete edge region of each pulse is variable in time position as a function of said intelligence signals.

5. A system as set forth in claim 1 wherein said switching means comprises at least one photoconductive switch (424).

6. A system as set forth in claim 5 wherein said switching means (63) comprises:
a layer of light-responsive, variable-resistive material;
a pair of spaced electrodes on and coupled to said bases of said transmitting antenna; and
trigger means comprising light source means (61) responsive to said pulse generating means (52) for applying a discrete increment of light to said layer of material of a character wherein said material transitions from a nonconductive to a conductive state between said electrodes.

7. A system as set forth in claim 1 wherein said switching means (205) is positioned adjacent to said transmitting antenna (A, B of Fig. 8).

8. A system as set forth in claim 6 wherein:
said switching means (63, 205) is positioned adjacent to said bases of said transmitting antenna (A, B of Fig. 8); and
said system includes light tube means (426) for coupling light from said trigger means to said material of said switching means (63, 205).

9. A system as set forth in claim 6 wherein said material is diamond.

10. A system as set forth in claim 1 wherein said coherent signal generating means (322) is responsive to said series of pulses of said pulse generating means.

11. A system as set forth in claim 1 wherein said coherent signal generating means (322) comprises means responsive to the time of occurrence of the transmission of said A.C. carrierless burst signals for providing a said template signal at selected times after the occurrence of said transmission of said A.C. carrierless burst signals, and said output means (364) comprises means for indicating the presence of a finite received signal corresponding to the time of presence of a said template signal.

12. A system as set forth in claim 3 wherein said coherent signal generating means (234) comprises means responsive to received signals for providing repeated template signals at the average rate of said series of pulses, and said output means comprises means for indicating said intelligence signals.

13. A system as set forth in claim 12 wherein said output means comprises an audio reproducer (362).

14. A system as set forth in claim 3 wherein:
said pulse generating means (16, 31, 22) includes means for generating a dither signal wherein said series of pulses is responsive to the combination of intelligence signals and dither signals; and
said coherent signal generating means includes means for reproducing said dither signal, wherein the effect of said pulse generating means is cancelled.

15. A system as set forth in claim 1 wherein said broadband antenna means includes a monocyclic receiving antenna (204, 206, 200) comprising a pair of generally triangularly contoured elements wherein the bases of the elements are parallel and adjacent and coupled to said receiving means.

16. A system as set forth in claim 1 wherein said switching means includes an antenna switching impedance (202), and said switching means is directly coupled across said antenna elements.

17. A system as set forth in claim 1 further comprising:
bandpass filter means (522, 526) responsive to said integration means for providing a signal output responsive to a selected range of frequency; and
said output means (530) comprises means responsive to the output of said bandpass filter means for indicating the presence of a target moving within a selected range of velocities and at a selected range.

18. A system as set forth in claim 1 wherein the base and height dimensions of a said element (204) of said dipole are approximately the same.

19. A system as set forth in claim 1 wherein the length of each said element (204) is approximately the same.

## Patentansprüche

1. Time-domain-Übertragungssystem, aufweisend:
eine Breitbandantenneneinrichtung mit wenigstens einer Dipolantenne (200a, 200b) zum Senden und Empfangen trägerloser Wechselstromburstsignale, welche wiederum ein Paar elektrisch getrennter, in einer Ebene gesehen mit dreieckigem Umriß ausgebildete Elemente aufweist, wobei die Basen des Paares parallel liegen;
einen Radiosender, aufweisend:
eine Impulserzeugungseinrichtung (223) zur Erzeugung einer Serie zeitlich beabstandeter Impulse,
eine Gleichstromquelle (B) und
eine Schalteinrichtung (225), ansprechend auf die Impulserzeugungseinrichtung und gekoppelt mit der Gleichstromquelle und verbunden über den wenigstens einen Dipol (200a) der Breitbandantenneneinrichtung zum Schalten der Spannung zwischen Zuständen angelegter Spannung und nicht angelegter Spannung an den wenigstens einen Dipol, um dadurch eine Serie von Impulsen zu erzeugen und trägerlose Wechselstromburstsignale in den Raum zu senden; und
eine Radioempfangseinrichtung, aufweisend:
eine Signalempfangseinrichtung (328) gekoppelt mit der Breitbandantenneneinrichtung (200b) zum Empfang der trägerlosen Wechselstromburstsignale als Empfangssignale,
eine Kohärenzsignalerzeugungseinrichtung (322) zur Erzeugung von Schablonensignalen, die einen Zeitpolaritätszusammenhang mit den empfangenen Signalen aufweisen,
eine Signalmischeinrichtung (330) zum Multiplizieren der Schablonensignale mit den Empfangssignalen und zur Lieferung von Produktsignalen,
eine Integrationseinrichtung (350) ansprechend auf eine Serie der Produktsignale zur Lieferung eines Integralsignales, das eine bestimmte Funktion des Integrales einer Mehrzahl der Produktsignale ist,
eine Ausgabeeinrichtung (364) ansprechend auf die Integralsignale zur Lieferung einer Ausgabe, die die Korrelation zwischen den Empfangssignalen und den Schablonensignalen darstellt, und
gekennzeichnet dadurch, daß die Basen der dreieckig umrissenen Elemente (200) anliegend angeordnet sind.

2. System nach Anspruch 1, wobei die Impulserzeugungseinrichtung (312, 318, 322, 313, 34) eine Einrichtung aufweist zur Erzeugung der Impulse in unterschiedlichen Zeitabständen entsprechend einem gewünschten Muster.

3. System nach Anspruch 1, wobei die Impulserzeugungseinrichtung eine Modulalionseinrichtung (22, 24) aufweist zur Erzeugung zeitbeabstandeter Signale als Funktion einer Nachrichtenmodulation.

4. System nach Anspruch 3 mit:
einer Quelle (34) von Nachrichtensignalen; und
einer Modulationseinrichtung (22) ansprechend auf die Impulserzeugungseinrichtung (223) und die Quelle von Nachrichtensignalen, zur Lieferung einer Serie von zeitbeabstandeten Impulsen, und wobei wenigstens ein diskreter Kantenbereich jedes Impulses in seiner zeitlichen Lage variabel ist als Funktion der Nachrichtensignale.

5. System nach Anspruch 1, wobei die die Schalteinrichtung wenigstens einen photokonduktiven Schalter (424) aufweist.

6. System nach Anspruch 5, wobei die Schalteinrichtung (63) aufweist:
eine Lage von lichtempfindlichem Material mit variablem Widerstand;
ein Paar beabstandeter Elektroden auf und gekoppelt mit den Basen der Sendeantenne; und
eine Triggereinrichtung mit einer Lichtquelleneinrichtung (61) ansprechend auf die Impulserzeugungseinrichtung (52), zum Anlegen diskreter Lichtinkremente an die Materiallage mit der Eigenschaft, daß das Material zwischen den Elektroden aus einem nicht leitenden in einen leitenden Zustand übergeht.

7. System nach Anspruch 1, wobei die Schalteinrichtung (205) der Sendeantenne (A, B in Fig. 8) anliegend angeordnet ist.

8. System nach Anspruch 6, wobei
die Schalteinrichtung (63, 205) den Basen der Sendeantenne (A, B in Fig. 8) anliegend angeordnet ist; und
das System eine Lichtrohreinrichtung (426) aufweist zum Koppeln des Lichtes von der Triggereinrichtung zu dem Material der Schalteinrichtung (63, 205).

9. System nach Anspruch 6, wobei das Material Diamant ist.

10. System nach Anspruch 1, wobei die Kohärenzsignalerzeugungseinrichtung (322) auf die Serie von Impulsen von der Impulserzeugungseinrichtung anspricht.

11. System nach Anspruch 1, wobei die Kohärenzsignalerzeugungseinrichtung (322) eine Einrichtung aufweist, die auf die Zeitpunkte des Auftretens von Übertragungen des trägerlosen Wechselstromburstsignales anspricht, zur Erzeugung eines Schablonensignales zu bestimmten Zeiten nach dem Ereignis der Sendung des trägerlosen Wechselstromburstsignales, und wobei die Ausgabeeinrichtung (364) eine Einrichtung aufweist zum Anzeigen der Anwesenheit eines finiten empfangenen Signales, das mit der Zeit der Anwesenheit eines Schablonensignales korrespondiert.

12. System nach Anspruch 3, wobei die Kohärenzsignalerzeugungseinrichtung (234) eine Einrichtung aufweist, die ansprechend auf die empfangenen Signale wiederholte Schablonensignale liefert mit der mittleren Rate der Serie von Impulsen, und wobei die Ausgabeeinrichtung eine Einrichtung aufweist zum Anzeigen der Nachrichtensignale.

13. System nach Anspruch 12, wobei die Ausgabeeinrichtung eine Audiowiedergabeeinrichtung (362) aufweist.

14. System nach Anspruch 3, wobei:
die Impulserzeugungseinrichtung (16, 31, 22) eine Einrichtung aufweist zur Erzeugung eines Zittersignales, wobei die Serie von Impulsen auf die Kombination der Nachrichtensignale und der Zittersignale anspricht; und
die Kohärenzsignalerzeugungseinrichtung eine Einrichtung aufweist zur Wiedergabe des Zittersignales, wobei die Wirkung der Impulserzeugungseinrichtung aufgehoben ist.

15. System nach Anspruch 1, wobei die Breitbandantenneneinrichtung eine monozyklische Empfangsantenne (204, 206, 200) aufweist mit einem Paar von Elementen mit im wesentlichen dreieckförmigem Umriß, wobei die Basen der Elemente parallel und anliegend sowie mit der Empfangseinrichtung gekoppelt ausgebildet sind.

16. System nach Anspruch 1, wobei die Schalteinrichtung eine Antennenschaltimpedanz (202) aufweist und wobei die Schalteinrichtung direkt über die Antennenelemente gekoppelt ist.

17. System nach Anspruch 1, weiterhin aufweisend:
eine Bandpaßfiltereinrichtung (522, 526) ansprechend auf die Integrationseinrichtung zur Lieferung eines Ausgangssignales, das auf einen bestimmten Frequenzbereich anspricht; und
eine Ausgabeeinrichtung (530), die eine Einrichtung aufweist, welche auf das Ausgangssignal der Bandpaßfiltereinrichtung anspricht zur Anzeige der Gegenwart eines Zieles, das sich innerhalb eines bestimmten Geschwindigkeitsbereiches und innerhalb einer bestimmten Reichweite bewegt.

18. System nach Anspruch 1, wobei die Basis- und Höhenabmessungen der Elemente (204) des Dipoles angenähert gleich sind.

19. System nach Anspruch 1, wobei die Längen der Elemente (204) angenähert gleich sind.

## Revendications

1. Système de transmission à domaine temporel, comprenant :
une antenne à large bande comprenant au moins une antenne dipolaire (200a, 200b) destinée à transmettre et recevoir des signaux alternatifs de salves sans porteuse, et comprenant deux éléments séparés électriquement, de profil triangulaire, observés dans un plan, les bases de la paire d'éléments étant parallèles,
un émetteur radioélectrique comprenant :
un dispositif générateur d'impulsions (223) destiné à créer une série d'impulsions espacées dans le temps,
une source d'énergie en courant continu (B), et
un dispositif (225) de commutation commandé par le dispositif générateur d'impulsions et couplé à la source d'énergie continue et connecté aux bornes d'au moins un dipôle (200a) de l'antenne à large bande pour la commutation d'énergie entre des états d'énergie appliquée et d'énergie non appliquée audit dipôle au moins, avec création de cette manière d'une série d'impulsions et transmission de signaux alternatifs de salves sans porteuse dans l'espace, et
un dispositif de réception radioélectrique qui comprend :
un dispositif de réception de signaux (328) couplé à l'antenne à large bande (200b) pour la réception des signaux alternatifs de salves sans porteuse sous forme de signaux reçus,
un dispositif (322) générateur de signaux cohérents destiné à créer des signaux de gabarit qui présentent une cohérence temps-polarité avec les signaux reçus,
un dispositif (330) de mélange de signaux destiné à multiplier les signaux de gabarit et les signaux reçus et à donner des signaux produits,
un dispositif (350) d'intégration commandé par une série de signaux produits et destiné à donner un signal intégré qui est une fonction choisie de l'intégrale de plusieurs des signaux produits, et
un dispositif de sortie (364) commandé par un signal intégré et destiné à donner un signal de sortie représentatif d'une corrélation entre les signaux reçus et de gabarit, et
caractérisé en ce que les bases des éléments de profil triangulaire (200) sont adjacentes.

2. Système selon la revendication 1, dans lequel le dispositif générateur d'impulsions (312, 318, 322, 313, 34) comporte un dispositif générateur des impulsions sous forme irrégulièrement espacée dans le temps avec un motif voulu.

3. Système selon la revendication 1, dans lequel le dispositif générateur d'impulsions comprend un dispositif de modulation (22, 24) destiné à créer des signaux espacés dans le temps en fonction d'une modulation intelligible.

4. Système selon la revendication 3, dans lequel le système comporte :
une source de signaux intelligibles (34), et
un dispositif (22) de modulation commandé par le dispositif générateur d'impulsions (223) et la source de signaux intelligibles et destiné à donner la série d'impulsions espacées dans le temps, et une région séparée de flanc au moins de chaque impulsion a une position variable dans le temps en fonction des signaux intelligibles.

5. Système selon la revendication 1, dans lequel le dispositif de communication comprend au moins un commutateur photoconducteur (424).

6. Système selon la revendication 5, dans lequel le dispositif de commutation (63) comprend :
une couche d'un matériau photosensible à résistance variable,
une paire d'électrodes espacées placées sur les bases de l'antenne d'émission et couplées à ces bases, et
un dispositif de déclenchement comprenant une source lumineuse (61) commandée par le dispositif générateur d'impulsions (52) et destinée à appliquer une quantité élémentaire de lumière à la couche de matière avec une nature telle que la matière passe d'un état non conducteur à un état conducteur entre les électrodes.

7. Système selon la revendication 1, dans lequel le dispositif de commutation (205) est placé près de l'antenne d'émission (A, B de la figure 8).

8. Système selon la revendication 6, dans lequel :
le dispositif de commutation (63, 205) est placé près des bases de l'antenne d'émission (A, B de la figure 8), et
le système comprend un dispositif à tube lumineux (426) destiné à coupler la lumière du dispositif de déclenchement à la matière du dispositif de commutation (63, 205).

9. Système selon la revendication 6, dans lequel la matière est le diamant.

10. Système selon la revendication 1, dans lequel un dispositif (322) générateur de signaux cohérents est commandé par la série d'impulsions du dispositif générateur d'impulsions.

11. Système selon la revendication 1, dans lequel le dispositif générateur de signaux cohérents (322) comporte un dispositif commandé par le moment de l'apparition de la transmission des signaux alternatifs de salves sans porteuse et destiné à donner un signal de gabarit à des moments choisis après l'apparition de la transmission des signaux alternatifs de salves sans porteuse, et le dispositif de sortie (364) comporte un dispositif destiné à indiquer la présence d'un signal reçu fini correspondant au temps de présence d'un signal de gabarit.

12. Système selon la revendication 3, dans lequel le dispositif générateur de signaux cohérents (234) comporte un dispositif commandé par les signaux reçus et destiné à transmettre des signaux répétés de gabarit à une fréquence moyenne de la série d'impulsions, et le dispositif de sortie comporte un dispositif destiné à indiquer les signaux intelligibles.

13. Système selon la revendication 12, dans lequel le dispositif de sortie comprend un organe de reproduction d'audiofréquences (362).

14. Système selon la revendication 3, dans lequel :
le dispositif générateur d'impulsions (16, 31, 22) comporte un dispositif destiné à créer un signal de vibration tel que la série d'impulsions est commandée par la combinaison des signaux intelligibles et des signaux de vibration, et
le dispositif générateur de signaux cohérents comporte un dispositif destiné à reproduire le signal de vibration, si bien que l'effet du dispositif générateur d'impulsions est compensé.

15. Système selon la revendication 1, dans lequel l'antenne à large bande comprend une antenne réceptrice monocyclique (204, 206, 200) qui comporte deux éléments ayant un profil triangulaire de manière générale, les bases des éléments étant parallèles et adjacentes et couplées au dispositif de réception.

16. Système selon la revendication 1, dans lequel chaque dispositif de commutation comporte une impédance (202) de commutation d'antenne, et le dispositif de commutation est directement couplé aux bornes des éléments d'antenne.

17. Système selon la revendication 1, comprenant en outre :
un filtre passe-bande (522, 526) commandé par le dispositif d'intégration et destiné à transmettre un signal en fonction de la plage choisie de fréquences, et
le dispositif de sortie (530) comporte un dispositif commandé par le signal de sortie du filtre passe-bande et destiné à indiquer la présence d'une cible qui se déplace dans une plage choisie de vitesses et à une distance choisie.

18. Système selon la revendication 1, dans lequel les dimensions de base et de hauteur d'un élément (204) du dipôle sont approximativement les mêmes.

19. Système selon la revendication 1, dans lequel les longueurs des éléments (204) sont approximativement les mêmes.
